(19) Europäisches Patentamt
European Patent Office
Office européen des brevets

(11) Publication number: **0 110 123**
**B1**

(12) **EUROPEAN PATENT SPECIFICATION**

(45) Date of publication of patent specification: **04.03.87**

(21) Application number: **83110657.0**

(22) Date of filing: **25.10.83**

(51) Int. Cl.$^4$: **C 08 L 51/00,** C 08 F 285/00 // (C08L51/00, 25:00, 33:00),(C08F285/00, 220:12)

(54) **Delustering thermoplastic resin compostion.**

(30) Priority: **28.10.82 JP 188220/82**
**10.11.82 JP 195951/82**
**11.11.82 JP 196838/82**
**12.11.82 JP 197791/82**

(43) Date of publication of application:
**13.06.84 Bulletin 84/24**

(45) Publication of the grant of the patent:
**04.03.87 Bulletin 87/10**

(84) Designated Contracting States:
**DE FR GB**

(56) References cited:
**EP-A-0 060 042**
**FR-A-2 159 882**
**GB-A-1 340 025**
**US-A-3 787 522**

(73) Proprietor: **MITSUBISHI RAYON CO. LTD.**
**3-19, Kyobashi 2-chome Chuo-Ku**
**Tokyo 104 (JP)**

(72) Inventor: **Kishida, Kazuo**
**74-404, Ohnocho**
**Saiki-gun Hiroshima-ken (JP)**
Inventor: **Sugimori, Masahiro**
**3-2-6-206, Kurokawa**
**Ohtake-shi Hiroshima-ken (JP)**

(74) Representative: **Patentanwälte TER MEER - MÜLLER - STEINMEISTER**
**Mauerkircherstrasse 45**
**D-8000 München 80 (DE)**

**EP 0 110 123 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a multi-layer structure polymer composition comprising an innermost layer polymer, an intermediate layer polymer and an outermost layer polymer and comprising an acrylic crosslinked elastomer as its core, being excellent in its weathering resistance and other properties, and its use for the manufacture of the delustered films or sheets.

There have heretofore been made a large number of attempts to laminate the surface of moldings of polyvinyl chloride resins, ABS resins, polycarbonate resins, etc. which are slightly defective in weathering resistance or various moldings laminated with these resins such as polyvinyl chloride-steel plate or polyvinyl chloride wall paper with acrylic resin compositions excellent in weathering resistance thereby to improve their weathering resistances, and also attempts to laminate these with resin compositions excellent in chemical resistance and contamination resistance thereby to improve their chemical resistances and contamination resistances.

However, in the present situation, most of the above attempts have not necessarily been successful, because it is not easy to satisfy all properties required for a laminating material with an acrylic resin composition such as flexibility, toughness, processability, adhesiveness, etc. along with the above purpose of improvement of contamination resistance, chemical resistance, weathering resistance, etc.

Also, particularly for housing interior materials such as wall paper or housing device articles such as household electric appliances, those with their surfaces under delustered state are preferred, but the above-mentioned acrylic resin composition, which is in itself a highly lustrous resin, can difficultly respond to such a requirement.

More specifically, for example, during manufacturing polyvinyl chloride wall papers as mentioned above, it is difficult to obtain a sufficient delustered state by the surface embossing working by calendering rolls generally practiced. On the other hand, according to the method in which an acrylic resin composition is mixed and laminated with a certain kind of delustering agent, most generally an inorganic material such as calcium carbonate or silica, the acrylic resin composition will be markedly lowered in such properties as flexibility, toughness and others and its processability, whereby the problem with respect to incompatibility of the above flexibility, processability and other properties with contamination resistance, weathering resistance and delustering effect may become consequently more difficult.

EP—A—0 060 042 describes a multi-layer structure polymer composition having a gel content of at least 50% which is constituted of an innermost layer polymer consisting mainly of alkyl acrylate, alkyl methacrylate or a mixture thereof, a crosslinked elastomer polymer consisting mainly of alkyl acrylate, said innermost layer polymer and said crosslinked elastomer polymer constituting a double layer elastomer structure polymer, as well as an outermost layer polymer consisting mainly of alkyl methacrylate and at least one intermediate layer existing between said cross-linked elastomer polymer and said outermost layer polymer, the amount of alkyl acrylate in said intermediate layer linearly decreasing from said crosslinked elastomer polymer to said outermost layer polymer layer. This multi-layer structure polymer composition is being stated to be usable as a moulding material for a wide variety of products.

In view of the state of the art as described above, the present inventors have made extensive studies in order to obtain an acrylic resin composition suitable for laminating materials or materials for films for laminating which is endowed with flexibility and processability as well as contamination resistance, weathering resistance and delustering characteristics of high quality as described above. As a consequence, it has now been found that a resin composition having formulated a moderately crosslinked polymeric delustering agent comprising an aromatic vinyl monomer and an alkyl (meth)acrylate as the main components with a thermoplastic polymer system comprising an acrylic multi-layer structure polymer having an acrylic crosslinked elastomer as its core, and further containing a fluorinated polymer and the like if desired, can satisfy this object to accomplish this invention.

In accordance with this invention, there is provided a delustering thermoplastic resin composition, comprising an acrylic multi-layer structure polymer (I) containing an acrylic crosslinked elastomer as its core as defined below and a polymeric delustering agent (II), having a structure as defined below, constituted of an aromatic vinyl monomer and an alkyl (meth)acrylate as main components, and also a delustering thermoplastic resin composition comprising 100 parts by weight (hereinafter abbreviated as parts) of a thermoplastic resin composition comprising 1 to 99 parts of an acrylic multi-layer structure polymer (I) and 1 to 99 parts of at least one kind of fluorinated polymers selected from the group of homopolymers of the monomers (II) represented by the formula $CF_2{=}CXY$ (wherein X and Y represent H, F, Cl or $CF_3$) or

$$CH_2{=}\underset{\displaystyle CH_3}{\underset{|}{C}}{-}COOR$$

(wherein R represents a fluoroalkyl group), copolymers of two or more kinds of these monomers and copolymers of these monomers with other copolymerizable monomers containing 50% by weight (hereinafter abbreviated as %) or more of these monomers, formulated with 1 to 70 parts of a polymeric delustering agent (II).

Acrylic multi-layer structure polymer (I):

An acrylic multi-layer structure polymer (I) having the following layers as its fundamental structural units:

(A) an innermost polymer constituted of 60 to 100 parts of an alkyl acrylate having an alkyl group with 1 to 8 carbon atoms ($A_1$),

0 to 40 parts of a monomer having a copolymerizable double bond ($A_2$),

0 to 10 parts of a polyfunctional monomer ($A_3$), and

0.1 to 5 parts of a graft crosslinking agent per 100 parts of the total amount of the above ($A_1$) to ($A_3$), and having a gel content (hereinafter abbreviated as GC) of 60% or more and a degree of swelling (hereinafter abbreviated as DS) of 1 to 15, the content of the innermost polymer in said polymer (I) being 5 to 50%;

(C) at least one intermediate layer polymer constituted of

10 to 90 parts of an alkyl methacrylate having an alkyl group with 1 to 4 carbon atoms ($C_1$),

10 to 90 parts of an alkyl acrylate having an alkyl group with 1 to 8 carbon atoms ($C_2$),

0 to 20 parts of a monomer having a copolymerizable double bond ($C_3$),

0 to 10 parts of a polyfunctional monomer ($C_4$), and

0.1 to 5 parts of a graft crosslinking agent per 100 parts of the total amount of ($C_1$) to ($C_4$), the content of the intermediate layer polymer in said polymer (I) being 5 to 40%, and

(B) an outermost layer polymer constituted of:

60 to 100 parts of an alkyl methacrylate having an alkyl group with 1 to 4 carbon atoms ($B_1$), and

0 to 40 parts of a monomer having a copolymerizable double bond ($B_2$), the content of the outermost polymer in said polymer (I) being 10 to 85%, the proportions of the alkyl acrylates used in the above respective polymers being determined so as to be reduced from the innermost polymer (A) toward the outermost layer polymer (B).

Polymeric delustering agent (II):

A polymeric delustering agent (II) having a mean particle size of 1 to 500 μ comprising a polymer prepared by copolymerization of non-crosslinkable monomers comprising:

0 to 90 parts of an aromatic vinyl monomer,

10 to 100 parts of an alkyl acrylate having an alkyl with 1 to 13 carbon atoms and/or an alkyl methacrylate having an alkyl group with 1 to 4 carbon atoms,

0 to 40 parts of other mono-ethylenic unsaturated monomers, with 0.5 to 5 parts of a crosslinkable monomer having two or more double bonds per 100 parts of said non-crosslinkable monomer.

Referring now to the detailed description of the invention, first the acrylic multi-layer structure polymer (I) to be employed in this invention is to be described in more detail.

The innermost polymer (A) constituting the acrylic multi-layer structure polymer (I) imparts flexibility and toughness to said polymer (I). As the alkyl acrylate having an alkyl group with 1 to 8 carbon atoms ($A_1$) forming said polymer (A), there may be employed at least one kind of methyl acrylate, ethyl acrylate, propyl acrylate, butyl acrylate, 2-ethylhexyl acrylate and the like in an amount within the range from 60 to 100 parts. Among these monomers, the more advantageously can be used a monomer, the lower the glass transition temperature (hereinafter abbreviated as Tg) of its homopolymer is.

As the monomer having a copolymerizable double bond ($A_2$), there may be employed those which are copolymerizable with the above alkyl acrylate ($A_1$), including acrylamide, acrylic acid, methacrylic acid, (meth)acrylic acid derivatives such as lower alkyl methacrylate, lower alkoxy acrylate, cyanoethyl acrylate, etc., styrene, alkyl-substituted styrene, acrylonitrile, methacrylonitrile, etc., which can be used in an amount within the range from 0 to 40 parts.

The polyfunctional monomer ($A_3$) may be used in an amount within the range from 0 to 10 parts, and typical examples may include preferably ethylene glycol dimethacrylate, propylene glycol dimethacrylate, 1,3-butylene glycol dimethacrylate, 1,4-butylene glycol dimethacrylate and the like. Further, divinylbenzene, alkylene glycol diacrylate, etc. may also be included.

The graft crosslinking agent may be used in an amount within the range from 0.1 to 5 parts, preferably from 0.5 to 2 parts, per 100 parts of the total amount of the above ($A_1$) to ($A_3$). Specific examples may include allyl esters, methallyl esters, crotyl esters of an α,β-unsaturated mono-carboxylic acid or a di-carboxylic acid and triallyl cyanurate, triallyl isocyanurate and the like. As the allyl ester, there may be mentioned allyl esters such as of acrylic acid, methacrylic acid, maleic acid, fumaric acid and itaconic acid. In particular, allyl methacrylate exhibits an excellent effect. At a level of the graft crosslinking agent employed less than 0.1 part, the amount of graft bonding is too small, whereby linkage between layers will readily break during molding of the polymer finally obtained, whereby the properties such as transparency are greatly lowered. On the other hand, at a level in excess of 5 parts, elasticity is particularly lowered to impart no sufficient flexibility and toughness to the polymer obtained.

The content of the innermost polymer (A) in the acrylic multi-layer structure polymer (I) may be 5 to 50%, preferably 10 to 45%. At a level less than 5%, no objective flexibility or toughness can be imparted to the acrylic multi-layer structure polymer (I). On the contrary, at a level over 50%, melt-flow characteristic will be lowered to give no sufficient film-forming property necessary for laminating material.

Further, for the innermost polymer (A), there exist also preferable regions with respect to GC, DS and particle size in addition to the requirements as described above. In particular, as to the GC and the DS, it is

required to have a GC of 60% or more, preferably 80% or more, and a DS of 1 to 15, preferably in the range from 3 to 15, as determined according to the following measuring methods.

Method for measurement of GC and DS

According to the method of JIS K-6388, a predetermined amount (Wo) of said polymer is sampled, immersed in methyl ethyl ketone (hereinafter abbreviated as MEK) at 25°C for 48 hours to be swelled therein and thereafter withdrawn. After wiping off MEK from the swelled sample, its weight (Ww) is measured and MEK is removed by drying in a drier under reduced pressure to a constant weight, and the absolutely dried weight (Wd) is read to calculate respective values according to the following equations.

$$DS = \frac{\text{Weight after swelling with MEK (Ww)} - \text{Absolutely dried weight (Wd)}}{\text{Absolutely dried weight (Wd)}}$$

$$GC(\%) = \frac{\text{Absolutely dried weight (Wd)}}{\text{Weight of sample (Wo)}} \times 100$$

The innermost polymer (A) can be made to have a single layer structure without any particular problem, but it can be made into a double layer structure containing a polymer portion for the core (A′) and crosslinked elastomer portion (A″). A polymer portion for the core (A′) is different in composition or crosslinking density. In such a case, in order to obtain good physical properties, the crosslinked elastomer portion (A″) should rather be made so as to have a high polymerization degree and exhibit higher flexibility, while forming the polymer portion for the core (A′) higher in crosslinking density or harder in composition than the crosslinked elastomer portion (A″). Particularly, good results can be obtained when the crosslinked elastomer portion (A″) is a polymer layer constituted of:

80 to 100 parts of an alkyl acrylate having an alkyl group having 1 to 8 carbon atoms,

0 to 20 parts of a monomer having a copolymerizable double bond,

0 to 10 parts of a polyfunctional monomer, and

0.1 to 5 parts of a graft crosslinking agent per 100 parts of the total amount of these monomers, having a Tg of 0°C or lower with a GC of 80% or more and a DS of 1 to 15 and the polymer portion for the core (A′) is constituted of:

80 to 100 parts of an alkyl acrylate having an alkyl group having 1 to 8 carbon atoms and/or an alkyl methacrylate having an alkyl group having 1 to 4 carbon atoms,

0 to 20 parts of a monomer having a copolymerizable double bond,

0 to 10 parts of a polyfunctional monomer, and

0.1 to 5 parts of a graft crosslinking agent, and preferably said polymer portion for the core (A′) having a higher crosslinking density or a harder composition (with less proportion of the alkyl acrylate component) than the crosslinked elastomer portion (A″).

The proportion of the polymer portion for the core (A′) within the innermost polymer (A) may be preferably 5 to 35%, preferably 10 to 35%.

Further, the outermost layer polymer (B) constituting the multi-layer structure polymer (I) plays a role in distributing molding characteristics, mechanical properties, etc. As the alkyl methacrylate ($B_1$) having an alkyl group with 1 to 4 carbon atoms, at least one kind of methyl methacrylate, ethyl methacrylate, propyl methacrylate, butyl methacrylate and the like is employed in an amount within the range from 60 to 100 parts. In particular, methyl methacrylate is preferred.

As the monomer having a copolymerizable double bond ($B_2$), there may be employed an alkyl acrylate having an alkyl group with 1 to 8 carbon atoms or otherwise those as exemplified for the aforesaid ($A_2$) component (provided that alkyl methacrylates having alkyl groups with 1 to 4 carbon atoms are excluded). These ($B_2$) components may be employed in an amount within the range from 0 to 40 parts.

The amount of the outermost layer polymer (B) in the acrylic multi-layer structure polymer (I) may be 10 to 85%, preferably 50 to 85%. At a level less than 10%, no polymer stable during coagulation or other operations can be obtained. On the other hand, at a level in excess of 85%, the content of the innermost polymer (A) becomes so small that no desired elasticity can be obtained.

During polymerization of the outermost layer polymer (B), polymerization degree may be controlled by use of a chain transfer agent, etc. and such an operation may rather be preferred in many cases.

In order to obtain various excellent properties, the Tg of the outermost layer polymer (B) alone may be desirably 60°C or higher, preferably 80°C or higher.

The acrylic multi-layer structure polymer (I) employed in the present invention has the fundamental structural units comprising the above innermost polymer (A), and the outermost layer polymer (B) and at least one intermediate layer polymer (C). This intermediate layer polymer (C) is induced for the purpose of promoting affinity between said polymer (A) and said polymer (B), which is constituted of 10 to 90 parts of an alkyl methacrylate having an alkyl group with 1 to 4 carbon atoms ($C_1$), 90 to 10 parts of an alkyl acrylate

having an alkyl group with 1 to 8 carbon atoms, 0 to 20 parts of a monomer having a copolymerizable double bond ($C_3$), 0 to 10 parts of a polyfunctional monomer ($C_4$) and 0.1 to 5 parts of a graft crosslinking agent per 100 parts of the total amount of the above monomers ($C_1$)—($C_4$) in the form such that the proportion of the alkyl acrylate used in the above respective polymers may be decreased from the innermost polymer (A) toward the outermost layer polymer (B). The components ($C_1$) to ($C_4$) and the graft crosslinking agent employed here may be the same as the respective components to be employed for the above polymer (A).

Also, in the above intermediate layer polymer (C), a graft crosslinking agent is essential and a multi-layer structure polymer without use of this agent will be readily whitened when subjected to a stress to give no polymer with desirable characteristics. Preferable amount of the graft crosslinking agent may be 0.1 to 5 parts per 100 parts of the total amount of the other monomers constituting the intermediate layer polymer (C), preferably 0.5 to 2 parts.

The content of the intermediate layer polymer (C) in the acrylic multi-layer structure polymer (I) may be 5 to 40%. When it is over 40%, the balance of the properties of the final polymer as a whole will unfavorably be destroyed.

The acrylic multi-layer structure polymer (I) of this invention is constituted of the above-mentioned polymer layers (A), (B) and (C). Additionally, it is also necessary for giving said polymer (I) that its GC is at least 50% and preferably at least 60%, which is one of the important characteristic features of this invention. The term "GC" herein referred to comprises the content of the innermost polymer (A) itself and the content of graft components onto said polymer (A) in the intermediate layer polymer (C) and outermost layer polymer (B). Said GC is expressed by % of the insoluble matter obtained by preparing 1% MEK solution of multi-layer structure polymer (I), allowing the solution to stand at 25°C for 24 hours and then centrifuging it by means of a centrifugal machine at 16,000 r.p.m. for 90 minutes. Since the GC is the sum of the weights of innermost polymer (A) and graft chain, it can be replaced with a rate of grafting. In this invention, however, GC is used as the measure of the quantity of grafting because of the special structure of the multi-layer structure polymer according to this invention.

Although a higher GC is advantageous from the viewpoint of solvent resistance, existence of free polymer having a weight not less than a critical weight is necessary from the viewpoint of easiness to mold. Therefore, the upper limit of the GC is preferably 80%.

The above acrylic multi-layer structure polymer (I) can be prepared easily by successive multi-stage polymerization according to conventional emulsion polymerization. That is, the innermost polymer (A) is first prepared by emulsion polymerization and the next layer is polymerized in the presence of said polymer (A). In this case, there is added no excessive emulsifier which will form a new micelle. This is sequentially repeated to complete polymerization of said multi-layer structure polymer (I). The emulsifier, catalyst and coagulant to be employed are not particularly limited. As the emulsifier, there may be employed those conventionally used in emulsion polymerization such as long-chain fatty acid salts, sulfonic acid salts, dialkylsulfosuccinate, polyoxyethylene alkylphenyl ethers, and others. As the catalyst, there may be employed any of water-soluble initiators such as potassium persulfate, oil-soluble initiators such as organic hydroperoxides, and redox system initiators formed by combining these with reducing agents such as sodium formaldehyde sulfoxylate.

The particle size of the final polymer is not also limited, but polymers having particle sizes within the range of about 800 to 2000 Å are found to exhibit the best-balanced physical properties.

A powdery polymer can be obtained by subjecting these emulsified latices, after addition thereto of an antioxidant, a lubricant, etc., to salting out treatment, followed by dehydration, washing, drying and so on.

The emulsion-suspension polymerization, in which, after emulsion polymerization, polymerization of only the outermost layer polymer (B) is converted to suspension polymerization, may also be mentioned as an advantageous method.

Referring next to the polymeric delustering agent (II), it is not only required to have a delustering effect, but also required to cause no impairment of the characteristics possessed by the acrylic multi-layer structure polymer (I) such as weathering resistance and also have no bad influence on its film forming property.

The delustering agent satisfying these various conditions, namely the polymeric delustering agent (II) to be used in this invention is a moderately crosslinked polymeric delustering agent containing an aromatic vinyl monomer and an alkyl (meth)acrylate as the main components, preferably a crosslinked polymer having a mean particle size of 1 to 500 μ prepared by copolymerization of a non-crosslinkable monomer, comprising 0 to 90 parts of an aromatic vinyl monomer, 10 to 100 parts of an alkyl acrylate having an alkyl group with 1 to 13 carbon atoms and/or an alkyl methacrylate having an alkyl group with 1 to 4 carbon atoms and 0 to 40 parts of other mono-ethylenic unsaturated monomer(s), and 0.5 to 5 parts, per 100 parts of said non-crosslinkable monomer of a crosslinkable monomer having two or more double bonds in the molecule, more preferably a crosslinked polymer having a mean particle size of 40 to 200 μ constituted of an aromatic vinyl monomer, an alkyl acrylate having an alkyl group with 1 to 13 carbon atoms and/or an alkyl methacrylate having an alkyl group with 1 to 4 carbon atoms, and a crosslinkable monomer.

Typical examples of the aromatic vinyl monomer to be used in preparation of the above polymeric delustering agent (II) used in this invention may include styrene, vinyl toluene, α-methyl styrene, halogenated styrene and the like; typical examples of the alkyl acrylate having an alkyl group with 1 to 13

carbon atoms are ethyl acrylate, butyl acrylate, 2-ethylhexyl acrylate and the like; typical examples of the alkyl methacrylate having an alkyl group with 1 to 4 carbon atoms are methyl methacrylate, ethyl methacrylate, propyl methacrylate, butyl methacrylate and the like.

As other mono-ethylenic unsaturated monomers, there may be mentioned fumaric acid, maleic acid and copolymerizable carboxylic acids and esters thereof, (meth)acrylic acid, vinyl halides, vinyl esters, and acrylonitrile as their typical examples.

As the crosslinkable monomer, a compound having two or more unsaturated bonds in the molecule may be employed, preferably a compound of which at least one of the two or more double bonds is allyl group.

Typical examples of the crosslinkable monomer having allyl group are allyl methacrylate, triallyl cyanurate and triallyl isocyanurate. Other crosslinkable monomers available may include conventional polyfunctional monomers such as unsaturated carboxylic acid esters of alkylene glycols, unsaturated alcohol ethers of alkylene glycols and polyvalent vinylbenzenes.

The amount of the crosslinkable monomer added may be 0.5 to 5 parts, particularly preferably 1.5 to 4 parts per 100 parts of the non-crosslinkable monomer. In the case of an amount of the crosslinkable monomer less than 0.5 parts, no sufficient delustering effect can be obtained. On the contrary, use in excess of 5 parts will extremely lower film-forming property and other physical properties of the multi-layer structure polymer (I) employed as the base material. Thus, use of the polymeric delustering agent (II) outside the range as specified above is not suitable in practicing the invention.

In the polymeric delustering agent (II) to be used in this invention, its particle size is also another great factor, and a polymeric delustering agent (II) with a particle size of 1 to 500 μ may be employed, more preferably a particle size of 40 to 200 μ. A polymeric delustering agent (II) with a particle size less than 1 μ can give no sufficient delustering effect. On the contrary, with a particle size over 500 μ, film-forming property of the base material is lowered to a great extent and also there can be obtained only films with extremely coarsened faces.

Generally speaking, a polymer obtained from greater content of an aromatic vinyl monomer than that of an alkyl (meth)acrylate can give a well-balanced polymeric delustering agent (II). Preferable composition comprises 50 to 90 parts of an aromatic vinyl monomer and 10 to 50 parts of an alkyl (meth)acrylate, most preferably 50 to 80 parts of an aromatic vinyl monomer, 10 to 40 parts of an alkyl methacrylate and 10 to 40 parts of an alkyl acrylate. In any case, other mono-ethylenic unsaturated monomers can be used in an amount within the range of 40 parts or less, preferably 20 parts or less.

On the contrary, when transparency is particularly required, it is preferred to use an aromatic vinyl monomer in an amount of 40 parts or less. However, rather than employing no aromatic vinyl monomer, use of an aromatic vinyl monomer at a proportion within the range from 1 part to 40 parts is recommendable for obtaining a polymeric delustering agent (II) with well-balanced properties.

Such a polymeric delustering agent (II) can be prepared easily according to conventional suspension polymerization, but its preparation method is not limited thereto, and there exist no restriction with respect to polymerization technique so long as it can satisfy the requisite conditions such as particle size and others.

The acrylic multi-layer structure polymer (I) and the polymeric delustering agent (II) can be mixed sufficiently according to conventional blending methods, and the resultant mixture can be fabricated into films according to conventional methods such as the T-die method, the inflation method and the calendering method and the like. Alternatively, these films can be laminated while being extruded directly on the support surface, or it is also possible to obtain a laminated film according to the so called co-extrusion technique.

The amount of the polymeric delustering agent (II) added may be 1 to 70 parts per 100 parts of the acrylic multi-layer structure polymer (I), generally sufficiently 20 parts or less in many cases.

Thus, a blended composition of the acrylic multi-layer structure polymer (I) and the polymeric delustering agent (II) is suitable as the delustered covering material intended by this invention, since it can give a beautiful delustering appearance and is also excellent in weathering resistance and contamination resistance. Such a composition can be made to be more suitable as the delustering covering material by further blending a fluorinated polymer (III) as shown below, whereby toughness as the film and chemical resistance can be improved.

The fluorinated polymer (III) used in this invention is at least one polymer selected from the group of homopolymers of the monomers represented by the formula $CF_2{=}CXY$ (wherein X and Y represent H, F, Cl or $CF_3$) or

$$\begin{array}{l} CH_2{=}C{-}COOR \\ \quad\;\; | \\ \quad\; CH_3 \end{array}$$

(wherein R represents a fluoroalkyl group such as 2,2,2-trifluoroethyl, 2,2,3,3-pentafluoropropyl), copolymers of two or more kinds of these monomers and copolymers of these monomers with other copolymerizable monomers containing 50% or more of these monomers. Typical examples of such polymers may include polyvinylidene fluoride, polytetrafluoroethylene, polytrifluorochloroethylene,

copolymer of tetrafluoroethylene and vinylidene fluoride, copolymer of tetrafluoroethylene and hexafluoropropylene, poly-2,2,2-trifluoroethyl methacrylate and the like. Particularly, polyvinylidene fluoride and copolymer of tetrafluoroethylene and vinylidene fluoride are preferred.

The acrylic multi-layer structure polymer (I) and the fluorinated polymer (III) may be blended at a ratio within the range from 1:99 to 99:1 as desired depending on the characteristics required, but it is particularly preferred to use a blend containing 51% or more of the acrylic multi-layer structure polymer (I) in view of the adhesiveness to a base material when used as covering material.

In the case when the fluorinated polymer (III) is blended, the amount of the polymeric delustering agent (II) added may be 1 to 70 parts per 100 parts of the composition of the acrylic multi-layer structure polymer (I) and the fluorinated polymer (III), generally sufficiently 20 parts or less in many cases.

Blending of the acrylic multi-layer structure polymer (I) and the fluorinated polymer (III) with the polymeric delustering agent (II) may be possible according to conventional blending method such as by means of a Henschel mixer, but it is more preferred to heat the three components to a temperature higher than the softening points of both the acrylic multi-layer structure polymer (I) and the fluorinated polymer (III) and mix them mechanically under molten state, and there may generally be employed an appropriate method of mixing such as by passing through a screw type extruder in which the mixture can be subjected to shearing compression at the same time, by kneading through heated rolls or mixing in a heated high shearing mixing device such as a Banbury type mixer.

The delustering thermoplastic resin composition comprising the acrylic multi-layer structure polymer (I), the fluorinated polymer (III) and the polymeric delustering agent (II) thus obtained can be also molded easily into films or sheets according to conventional methods such as the T-die method, the inflation method and the calendering method or alternatively it can be laminated by extrusion directly onto a base material.

It is possible to add other conventional additives such as antioxidants, UV-ray absorbers, fillers, pigments, etc. to the delustering thermoplastic resin composition of this invention, if desired. Moreover, other polymers can also suitably be formulated into the composition in amounts within the range which will not lower its physical properties.

Particularly, in the delustering thermoplastic resin composition according to this invention, weathering resistance can preferably further be improved by addition of a UV-ray absorber.

This invention is illustrated in detail below by referring to the following Examples, but this invention is not necessarily limited thereto.

The abbreviations employed in the Examples mean the following:

MMA : Methyl methacrylate
BuA : Butyl acrylate
St : Styrene
BD : 1,3-Butyleneglycol dimethacrylate
AMA : Allyl methacrylate
CHP : Cumene hydroperoxide
SFS : Sodium formaldehyde sulfoxylate
MEK : Methyl ethyl ketone
n-$C_8$SH : Normal octyl mercaptan
LPO : Lauroyl peroxide
AIBN : Azobisisobutyronitrile
PVA : Polyvinyl alcohol
EA : Ethyl acrylate
AN : Acrylonitrile
PVC : Polyvinyl chloride

Example 1

(1) Preparation of an acrylic multi-layer structure polymer (I):

Into a reactor equipped with a condenser, 250 parts of deionized water, 1 part of sodium dioctylsulfosuccinate and 0.05 part of SFS were charged, and after stirring under nitrogen stream, a monomer mixture comprising 29 parts of BuA, 1 part of BD and 0.15 part of AMA was charged thereinto. In the monomer mixture had been dissolved 0.1% of CHP based on the total amount of BuA and BD. In all of the monomers in the subsequent steps, 0.1% of CHP was contained based each monomer, unless otherwise specifically noted. The reaction vessel was elevated to 50°C, while stirring at 200 rpm under nitrogen stream, until polymerization of the innermost polymer (A) was completed after stirring for 120 minutes. Then, an intermediate layer polymer (C) components comprising 10 parts of MMA, 10 parts of BuA and 0.1 part of AMA were added over 40 minutes, followed further by maintenance under the same reaction conditions for 40 minutes to complete polymerization of the intermediate layer polymer (C). Further, components for the outermost layer polymer (B) comprising 47.5 parts of MMA, 2.5 parts of BuA and 0.1 part of n-$C_8$SH were added over 60 minutes, followed further by maintenance under the same reaction conditions for 60 minutes to complete polymerization to prepare an acrylic multi-layer structure polymer [I—(a)]. By observation of the emulsion samples by an electron microscope after completion of the

respective layers, it was confirmed that no formation of new particles occurred but complete seed polymerization was effected. The resultant emulsion was subjected to coagulation, agglomeration and solidification by use of aluminum chloride, filtered, washed with water and dried to obtain a dry powder.

Innermost polymer (A): GC 89%; DS 5.5;

Acrylic multi-layer structure polymer [I-(a)]: GC 65%.

(2) Preparation of polymeric delustering agent (II):

Into the same reaction vessel as used in (1) were charged the following compounds:

| | |
|---|---|
| ST | 60 parts |
| MMA | 20 parts |
| BuA | 20 parts |
| AMA | 3 parts |
| n-$C_8$SH | 0.1 part |
| AIBN | 2 parts |
| Calcium tertiary phosphate | 2 parts |
| Water | 200 parts |

After the reaction vessel was replaced sufficiently with nitrogen gas, the mixture of the above compounds was heated under stirring to 75°C to permit polymerization to proceed in nitrogen gas. Three hours later, the reaction mixture was elevated to 85°C and maintained thereat for 3 hours, and then elevated to 95°C and held thereat for one hour to complete polymerization. After cooling, the reaction mixture was dehydrated and dried to obtain particulate beads of polymeric delustering agent [II-(a)]. The resultant beads had a weight average particle size of about 70 μ, a DS of 12 in MEK and a GC of 65%.

(3) Preparation and evaluation of delustering thermoplastic resin composition:

100 parts of the acrylic multi-layer structure polymer [I-(a)] prepared in (1) were admixed with 8 parts of the polymeric delustering agent [II-(a)] prepared in (2) and 1 part of UV-ray absorber, and the resultant mixture was extruded by means of an extruder having a 40 mmφ screw at 230°C and cut into pellets. The pellets obtained were dried sufficiently and thereafter fabricated into a film of about 50 μ in thickness by means of the same extruder according to the T-die method.

The thus prepared film was laminated on a laminated film of polyvinyl chloride type resin of a commercially available polyvinyl chloride-steel plate and passed through the two rolls at a temperature of 190°C, a line pressure of 2 kg/cm$^2$ and a speed of 10 m/min.

The polyvinyl chloride-steel plate laminated with the acrylic film had a 60° specular gloss of 21, thus having a uniformly and finely delustered appearance. Further, the polyvinyl chloride-steel plate laminated with the acrylic film was also found to be excellent in weathering resistance without causing discoloration or decoloration even after the accelerated exposure test by means of a sunshine weatherometer for 3000 hours.

Example 2

Into the same reaction vessel as used in Example 1-(2) were charged the compounds shown below. After the reaction vessel was replaced internally sufficiently with nitrogen gas, polymerization was carried out under stirring at 85°C for 2 hours, followed further by heat treatment at 95°C for 30 minutes to complete polymerization. The reaction mixture was cooled, dehydrated and dried to obtain a polymeric delustering agent [II-(b)].

| | |
|---|---|
| MMA | 60 parts |
| BuA | 35 parts |
| St | 5 parts |
| AMA | 2 parts |
| n-$C_8$SH | 0.2 part |
| LPO | 2 parts |
| PVA | 2 parts |
| Water | 200 parts |

The polymeric delustering agent [(II)-(b)] had a mean particle size of about 80 μ. According to the same procedure as in Example 1-(3) except for using the polymeric delustering agent [II-(b)] in place of [II-(a)], an acrylic delustered film was fabricated.

This acrylic delustered film was pressure bonded under heating onto a commercially available polyvinyl chloride wall paper by passing through the two rolls heated to 120°C under a line pressure of 10 kg/$cm^2$. The wall paper obtained had a 60° specular gloss of 18, having a uniformly and finely delustered appearance. When measurement of weather resistance of this wall paper was conducted in comparison with the wall paper of the prior art by the acceleration exposure test by a fade meter, the polyvinyl chloride wall paper of the prior art was completely discolored in yellow after about 100 hours, while the polyvinyl chloride wall paper laminated with the acrylic delustered film was not discolored in yellow even after about 300 hours, thus indicating that the delustering thermoplastic resin composition of this Example is also excellent in weathering resistance.

Example 3

To 100 parts of the acrylic multi-layer structure polymer [I-(a)] prepared in Example 1-(1), 8 parts of the polymeric delustering agent prepared in Example 2 and 1 part of a UV-ray absorber and 5 parts of a green pigment were added, and pellets were obtained from the resultant mixture following the same procedure as in Example 1-(3).

The pellets were sufficiently dried and, according to the method in which they were applied directly on a pipe of 10 mmϕ while being extruded, a pipe laminated with a delustering thermoplastic resin composition was prepared.

The pipe exhibited a green appearance uniformly and sufficiently delustered, and its weathering resistance was also found to be markedly excellent.

Example 4

After 80 parts of the acrylic multi-layer structure polymer [I-(a)] prepared in Example 1-(1), 20 parts of a polyvinylidene fluoride (Kinar 901, a tradename, produced by Pennwalt Co.), 10 parts of the polymeric delustering agent prepared in Example 2 and 1 part of a UV-ray absorber were blended in a Henschel mixer, the resultant mixture was molded into pellets by means of an extruder having a 40 mmϕ screw. The pellets were sufficiently dried and then fabricated into a film with a thickness of 80 μ according to the inflation method. The film had a tensile strength of 310 kg/$cm^2$, an elongation at break of 140% and a 60° specular gloss of 25.

This film was laminated on a 0.5 mm zinc plated cold rolled steel plate with the use of a commercially available adhesive, and subjected to accelerated exposure test by means of a sunshine weatherometer for 3000 hours, whereby no change in appearance was observed after exposure, thus indicating good weathering resistance.

Comparative Example 1

Example 4 was repeated except for using a commercially available calcium carbonate in place of the polymeric delustering agent [II-(a)] to fabricate a film.

The film obtained had a coarse appearance, with delustering being insufficient (60° specular gloss of 85) and it was also brittle (elongation at break of 25%).

Example 5

After 90 parts of the acrylic multi-layer structure polymer [I-(a)] prepared in Example 1-(1), 10 parts of a copolymer of vinylidene fluoride and tetrafluoroethylene (Kinar 7201, a tradename, produced by Pennwalt Co.), 10 parts of the polymeric delustering agent [II-(a)] prepared in Example 1 and 1 part of a UV-ray absorber were blended in a Henschel mixer, the resultant mixture was molded into pellets by means of an

extruder having a 40 mmϕ screw. After the pellets were dried sufficiently, they were fabricated into a film with a thickness of 50 μ by means of the same extruder according to the T-die method.

The film had a tensile strength of 305 kg/cm², an elongation at break of 160% and a 60° specular gloss of 28.

This delustered film was pressure bonded under heating onto a commercially available polyvinyl chloride wall paper by passing through the two rolls heated at 120°C under a line pressure of about 10 kg/cm². The weathering resistance of the resultant wall paper was evaluated according to the accelerated exposure test by a fade meter, as compared with the wall paper of the prior art having laminated no delustered film thereon.

The commercially available PVC wall film having no delustering film laminated thereon was discolored in yellow with 100 hour exposure, while no change was observed at all in the PVC wall film laminated with the delustered film of this Example with even 300 hour exposure.

Example 6

Films were prepared in the same manner as in Example 4 except for using the polymeric delustering agent [II-(b)] in amounts as indicated in Table 1, respectively, in place of the polymeric delustering agent [II-(a)]. Their 60° specular gloss and tensile strength values were measured to obtain the results as listed in Table 1.

TABLE 1

| Test No. | Amount of polymeric delustering agent [II-(b)] added (parts) | Film properties | |
|---|---|---|---|
| | | 60° Specular gloss | Elongation at break (%) |
| 6-(1) | 5 | 39 | 158 |
| 6-(2) | 10 | 27 | 142 |
| 6-(3) | 20 | 14 | 125 |
| 6-(4) | 50 | 7 | 98 |
| 6′ | 0 | 120 | 165 |

Example 7

(1) Into a vessel equipped with a condenser, 250 parts of deionized water, 2 parts of sodium dioctylsulfosuccinate and 0.05 part of SFS were charged, and after stirring under nitrogen stream, the mixture was elevated to 70°C. Then, a mixture of 1.6 parts of MMA, 8 parts of BuA, 0.4 part of BD, 0.1 part of AMA and 0.04 part of CHP was charged, and the reaction was continued for 60 minutes to complete polymerization of the polymer portion for the core (A′). Subsequently, a monomer mixture comprising 1.5 part of MMA, 22.5 parts of BuA, 1 part of BD, 0.25 part of AMA and 0.05% of CHP (based on the mixture of these monomers) was added over 60 minutes and further maintained for 60 minutes to polymerize a crosslinked elastomer portion (A″). The innermost polymer (A) comprising the polymer portion for the core (A′) and crosslinked elastomer portion (A″) was found to have a DS of 10 in MEK and a GC of 90%.

Next, a mixture of 5 parts of MMA, 5 parts of BuA and 0.1 part of AMA corresponding to the intermediate layer polymer (C) was added over 10 minutes to the above innermost polymer (A) to be polymerized, and finally a mixture of 52.25 parts of MMA and 2.75 parts of BuA was similarly polymerized to obtain an acrylic multi-layer structure polymer [I-(b)]. The content of CHP employed in polymerization in the intermediate layer polymer (C) and the outermost layer polymer (B) was 0.1% based on the monomer quantity used in each layer.

The acrylic multi-layer structure polymer [I-(b)] had a final latex particle size of 0.13 μ, and the latex was salted out with 5 parts of calcium chloride, filtered, washed with water, followed by dehydration and drying, to obtain dry powder.

The acrylic multi-layer structure polymer [I-(b)] had a final GC of 67%. The Tg of the outermost layer polymer (B) in the acrylic multi-layer structure polymer [I-(b)] as calculated from the Tg values of the respective homopolymers disclosed in Polymer Handbook (John Wiley & Sons) according to the Fox's formula generally known in the art:

$$\frac{1}{Tg} = \frac{a_M}{Tg_M} + \frac{a_B}{Tg_B}$$

wherein $a_M$ and $a_B$ are weight ratios of MMA and BuA, respectively, and $Tg_M$ and $Tg_B$ are Tg values of homopolymers of MMA and BuA, respectively, was determined to be about 87°C.

Similarly, the acrylic multi-layer structure polymers [I-(c)] and [I-(d)] and a comparative acrylic multi-layer polymer [I-(i)] were obtained. Each polymer was found to have a final particle size of 0.1 to 0.15 μ.

(2) According to the same procedure as in Example 1-(2), polymeric delustering agents [II-(c)] and [II-(d)] and comparative polymeric delustering agents [II-(i)] to [II-(iii)] were obtained. Each product was found to have a weight average particle size of 60 to 90 μ.

TABLE 2

| | Acrylic multi-layer polymer | | | Comparative acrylic multi-layer polymer |
|---|---|---|---|---|
| | I-(b) | I-(c) | I-(d) | I-(i) |
| Polymer composition: | | | | |
| (A)—(A′) | M/B/BD/AMA 1.6/8/0.4/ 0.1 | M/B/BD/AMA 1.6/8/0.4/ 0.1 | M/S/B/BD/AMA 1.28/0.32/ 8/0.4/0.1 | M/B/BD 1.6/8/0.4 |
| (A)—(A″) | M/B/BD/AMA 1.5/22.5/ 1.0/0.25 | M/B/BD/AMA 1.5/22.5/ 1.0/0.25 | M/S/B/BD/AMA 1.2/0.3/22.5/ 1.0/0.25 | M/B/BD 1.5/22.5/ 1.0 |
| (C)—(C1) | M/B/AMA 5/5/0.1 | M/B/MA 2/3/0.05 | M/S/B/AMA 4/1/5/0.1 | M/B 5/5 |
| (C)—(C2) | — | M/B/AMA 3/2/0.05 | — | — |
| (B) | M/B 52.25/ 2.75 | M/B 52.25/ 2.75 | M/S/B 41.8/ 10.45/2.75 | M/B 52.25/ 2.75 |
| Ratio of outermost layer polymer (B): | M/B 95/5 | M/B 95/5 | M/S/B 76/19/5 | M/B 95/5 |
| Tg of outermost layer polymer (B) (°C): | 86.6 | 86.6 | — | 86.6 |
| GC of innermost polymer (A) (wet %): | 90 | 90 | 90 | 88 |
| DS of innermost polymer (A) (wet %): | 10 | 10 | 10 | 11 |
| GC of final polymer (wet %): | 67 | 68 | 68 | 40 |

In Table 2:
M: MMA
B: BuA
S: St
C1, C2: The first and the second layer components when the intermediate layer polymer (C) has two layers.

Further, according to entirely the same procedure except for reducing the amount of calcium tertiary phosphate to 1/4, polymerization was carried out with the same monomeric composition as in the polymeric delustering agent [II-(a)] to prepare a comparative polymeric delustering agent [II-(iv)] having a weight average particle size of 600 μ.

Also, another comparative polymeric delustering agent [II-(v)] with a particle size of about 0.2 μ was also polymerized with the same monomeric composition as in the polymeric delustering agent [II-(a)] according to conventional emulsion polymerization.

TABLE 3

| Polymeric delustering agent | Non-crosslinkable monomer | | | | | Cross-linkable monomer (AMA) |
|---|---|---|---|---|---|---|
| | St | MMA | BuA | EA | AN | |
| [II-(a)] | 60 | 20 | 20 | | | 3 |
| [II-(c)] | 70 | 10 | | 20 | | 3 |
| [II-(d)] | 50 | 10 | 30 | | 10 | 2.5 |
| Comparative polymeric delustering agent [II-(i)] | 60 | 20 | 20 | | | 0 |
| [II-(ii)] | 60 | 20 | 20 | | | 6 |
| [II-(iii)] | 60 | | | | 40 | 3 |

(3) Preparation and evaluation of delustered films:

100 Parts of the acrylic multi-layer structure polymer [I-(b)] were admixed with 8 parts of the polymeric delustering agent [II-(a)] and 1 part of a UV-ray absorber, and the resultant mixture was extruded by means of an extruder having a 40 mmφ screw at 230°C and cut into pellets. The pellets obtained were dried sufficiently and thereafter fabricated into a film of about 35 μ in thickness by means of the same extruder according to the T-die method. The film obtained was very beautiful, being finely delustered with slightly opal-like tone. For this film [Example 7-(1)], weathering resistance, 60° specular gloss and tensile elongation were evaluated to obtain the results shown in Table 4.

Concerning Examples 7-(2) to 7-(6) and Comparative Examples 7-(i) to 7-(vii), films were prepared according to the combinations as shown in Table 4 and evaluated to obtain the results which are also listed in Table 4.

From the results in Table 4, satisfactory results were obtained in any of the Examples according to this invention. In contrast, in the cases of having no delustering agent incorporated [Comparative Example (vii)], the product employing an uncrosslinked polymeric delustering agent [Comparative Example (i)] and employing a polymeric delustering agent with a particle size less than 1 μ, substantially no delustering effect was observed. On the contrary, with too much an amount of crosslinking agent, an inappropriate composition or too large particle size [Comparative Example (ii)—(iv)], film-forming property was poor to give no film with a desired thickness. Also, the film fabricated from a base of an acrylic multi-layer structure polymer with a GC less than 50%, weathering resistance was poor. Thus, substantially no satisfactory product was obtained from these Comparative Examples.

TABLE 4

| Example | Composition: Acrylic multi-layer polymer | Composition: Polymeric delustering agent (parts) | Film-forming level (1) | Gloss (2) | Tensile elongation (3) (%) | Weathering resistance (4) | Appearance |
|---|---|---|---|---|---|---|---|
| (1) | I-(b) | II-(a) 8 | A | 24 | 85 | A | Smooth |
| (2) | I-(b) | II-(a) 30 | B | 7.5 | 65 | B | " |
| (3) | I-(b) | II-(c) 8 | A | 22 | 80 | A | " |
| (4) | I-(b) | II-(d) 8 | A | 23 | 75 | A | " |
| (5) | I-(c) | II-(a) 8 | A | 25 | 88 | A | " |
| (6) | I-(d) | II-(a) 8 | A | 27 | 83 | A | " |
| Comparative Example (i) | I-(b) | II-(i) 8 | A | 95 | 90 | B | " |
| (ii) | I-(b) | II-(ii) 8 | C | — | — | — | — |
| (iii) | I-(b) | II-(iii) 8 | C | — | — | — | — |
| (iv) | I-(b) | II-(iv) 5 | C | — | — | — | — |
| (v) | I-(b) | II-(v) 20 | A | 103 | 80 | B | Hazy |
| Control polymer (vi) | I-(i) | II-(a) 8 | B | 35 | 35 | D | Hazy |
| (vii) | I-(b) | no addition | A | 120 | 95 | A | Smooth (transparent) |

In the above Table:

(1) Film-forming level:
A: Fabrication of 35 μ film can easily be done according to the T-dye method.
B: Fabrication of 50 μ film can easily be done according to the T-dye method.
C: No fabrication of 50 μ film is possible according to the T-dye method.

(2) Gloss: Measured value of 60° specular gloss.

(3) Tensile elongation: Elongation at break when tested at a tensile speed of 100%/min. by means of Tensilon.

(4) Weathering resistance: Retention percentage of tensile elongation after irradiation in sunshine weatherometer for 2000 hours.
A: more than 90%; B: more than 75%; C: 50 to 75%; D: less than 50%.

Example 8

After 80 parts of the acrylic multi-layer structure polymer [I-(b)] prepared in Example 7-(1), 20 parts of a polyvinylidene fluoride (Kinar 901, produced by Pennwalt Co.), 10 parts of the polymeric delustering agent [II-(a)] prepared in Example 1-(2) and 1 part of a UV-ray absorber were blended in a Henschel mixer, the resultant mixture was molded into pellets by means of an extruder having a 40 mmϕ screw. The pellets were sufficiently dried and then fabricated into a film with a thickness of 80 μ according to the inflation method. The film had a tensile strength of 320 $kg/cm^2$, an elongation at break of 150% and a 60° specular gloss of 25.

This film was laminated on a 0.5 mm zinc plated cold rolled steel plate with the use of a commercially available adhesive, and subjected to accelerated exposure test by means of a sunshine weatherometer for 3000 hours, whereby no change in appearance was observed after exposure, thus indicating good weathering resistance.

Example 9

(1) In the same manner as in Example 7-(1), an acrylic multi-layer structure polymer [I-(e)] having the respective layer polymers constituted of the following compositions was polymerized:

Innermost polymer (A) Polymer portion for the core (A′): MMA 5.6 parts, BuA 4 parts, BD 0.4 part, AMA 0.1 part;
Crosslinked elastomer portion (A″): MMA 1.5 parts, BuA 22.5 parts, BD 1.0 part, AMA 0.25 part;
Intermediate layer polymer (C): MMA 5 parts, BuA 5 parts, AMA 0.1 part
Outermost layer polymer (B): MMA 52.25 parts, BuA 2.75 parts.

The innermost polymer (A) comprising the polymer portion for the core (A′) and the crosslinked elastomer portion (A″) in the acrylic multi-layer structure polymer obtained [I-(e)] had a GC of 88% and a DS of 6.2. The GC of the final polymer of the acrylic multi-layer structure polymer [I-(e)] was found to be 63%.

(2) Example 8 was repeated except that the acrylic multi-layer structure polymer [I-(e)] was employed in place of the acrylic multi-layer structure polymer [I-(b)] and the respective parts as indicated in Table 5 of the polymeric delustering agent [II-(b)] were employed in place of 10 parts of the polymeric delustering agent [II-(a)] to obtain a delustered film with a thickness of about 75 μ. The respective films obtained were subjected to measurements of 60° specular gloss and elongation thereof to obtain the results as shown in Table 5.

TABLE 5

| Test No. | Amount of polymeric delustering agent added (parts) | Film properties | |
|---|---|---|---|
| | | 60° Specular gloss | Elongation at break (%) |
| 9-(1) | 5 | 40 | 171 |
| 9-(2) | 10 | 29 | 152 |
| 9-(3) | 20 | 13 | 129 |
| 9-(4) | 50 | 8 | 108 |

Example 10

(1) In the same manner as in Example 7-(1), an acrylic multi-layer structure polymer [I-(f)] having the respective layer polymers constituted of the following compositions was polymerized:

Innermost polymer (A) Polymer portion for the core (A′): MMA 6 parts, BuA 4 parts, AMA 0.1 part;
Crosslinked elastomer portion (A″): BuA 57 parts, BD 3 part, AMA 0.6 part;
Intermediate layer polymer (C): MMA 5 parts, BuA 5 parts, AMA 0.1 part;
Outermost layer polymer (B): MMA 20 parts.

The innermost polymer (A) comprising the polymer portion for the core (A′) and the crosslinked elastomer portion (A″) in the acrylic multi-layer structure polymer obtained [I-(f)] had a GC of 93% and a DS of 5.2. The GC of the final polymer of the acrylic multi-layer structure polymer [I-(f)] was found to be 82%.

(2) 80 Parts of the acrylic multi-layer structure polymer [I-(f)], 20 parts of polyvinylidene fluoride, 10 parts of the polymeric delustering agent [II-(a)] and 1.5 parts of a UV-ray absorber were formulated and pellets were obtained therefrom similarly as in Example 1.

By use of the pellets, through co-extrusion with a semi-rigid polyvinyl chloride resin (containing 20 parts of di-2-ethylhexyl phthalate), a laminated film was obtained (PVC 100 μ, Acrylic 100 μ).

The laminated film obtained had a high 60° specular gloss of 90 on the PVC film side, but a sufficiently low value of 28 on the side of the resin composition in this invention, thus exhibiting uniformly delustered state.

When this laminated films was subjected to accelerated exposure test by means of sunshine weatherometer, the sample exposed on the side of PVC film was completely discolored or decolored and its gloss was also lost after 500 hours, while no discoloration or decoloration was observed at all on the side of the resin composition in this invention even after 3000 hours, and there was also recognized no migration of the plasticizer toward the film surface.

**Claims**

1. A multi-layer structure polymer composition comprising an innermost layer polymer, an intermediate layer polymer and an outermost layer polymer and comprising an acrylic crosslinked elastomer as its core, characterized by comprising 100 parts by weight (herein abbreviated as parts) of a thermoplastic resin comprising said multi-layer structure as defined below and 1 to 70 parts of a polymer delustering agent (II) as defined below, constituted of aromatic vinyl monomer and an alkyl (meth)acrylate as main components

(I) an acrylic multi-layer structure polymer having the following layers as its fundamental structural units:

(A) an innermost polymer constituted of:

60 to 100 parts of an alkyl acrylate having an alkyl group with 1 to 8 carbon atoms ($A_1$),

0 to 40 parts of a monomer having a copolymerizable double bond ($A_2$),

0 to 10 parts of a polyfunctional monomer ($A_3$), and

0.1 to 5 parts of a graft crosslinking agent per 100 parts of the total amount of the above ($A_1$) to ($A_3$), and having a gel content of 60% by weight (hereinafter abbreviated as %) or more and a degree of swelling of 1 to 15, the content of the innermost polymer in said polymer (I) being 5 to 50%;

(C) at least one intermediate layer polymer constituted of:

10 to 90 parts of an alkyl methacrylate having an alkyl group with 1 to 4 carbon atoms ($C_1$),

10 to 90 parts of an alkyl acrylate having an alkyl group with 1 to 8 carbon atoms ($C_2$),

0 to 20 parts of a monomer having a copolymerizable double bond ($C_3$),

0 to 10 parts of a polyfunctional monomer ($C_4$), and

0.1 to 5 parts of a graft crosslinking agent per 100 parts of the total amount of ($C_1$) to ($C_4$), the content of the intermediate layer polymer in said polymer (I) being 5 to 40%, and

(B) an outermost layer polymer constituted of:

60 to 100 parts of an alkyl methacrylate having an alkyl group with 1 to 4 carbon atoms ($B_1$) and

0 to 40 parts of a monomer having a copolymerizable double bond ($B_2$), the content of the outermost layer polymer in said polymer (I) being 10 to 85%, the proportions of the alkyl acrylates used in the above respective polymers being determined so as to be reduced from the innermost polymer (A) toward the outermost layer polymer (B); and

(II) a polymeric delustering agent having a mean particle size of 1 to 500 μ comprising a polymer prepared by copolymerization of non-crosslinkable monomers comprising:

0 to 90 parts of an aromatic vinyl monomer,

10 to 100 parts of an alkyl acrylate having an alkyl group with 1 to 13 carbon atoms and/or an alkyl methacrylate having an alkyl group with 1 to 4 carbon atoms,

0 to 40 parts of other mono-ethylenic unsaturated monomers, with 0.5 to 5 parts of a crosslinkable monomer having two or more double bonds per 100 parts of said non-crosslinkable monomer.

2. The delustering thermoplastic resin composition according to claim 1, characterized in that the thermoplastic resin consists of the acrylic multi-layer structure polymer (I).

3. The delustering thermoplastic resin composition according to claim 1, characterized in that the thermoplastic resin consists of 1 to 99 parts of the acrylic multi-layer structure polymer (I) and 99 to 1 part of at least one kind of fluorinated polymers selected from the group of homopolymers of the monomers represented by the formula

$$CF_2=CXY$$

(wherein X and Y represent H, F, Cl or $CF_3$) or

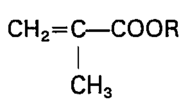

(wherein R represents a fluoroalkyl group), copolymers of two or more kinds of these monomers and copolymers of these monomers with other copolymerizable monomers containing 50% of these monomers.

4. The delustering thermoplastic resin composition according to claims 1, 2 or 3, characterized in that the acrylic multi-layer structure polymer (I) is one, comprising an innermost polymer (A) which has a double-layer structure comprising a crosslinked elastomer portion (A") constituted of:

80 to 100 parts of an alkyl acrylate having an alkyl group with 1 to 8 carbon atoms,

0 to 20 parts of a monomer having a copolymerizable double bond,

0 to 10 parts of a polyfunctional monomer, and

0.1 to 5 parts, per 100 parts of the total amount of these monomer(s), of a grafting crosslinking agent, and a polymer portion for the core (A') of the innermost polymer (A) constituted of:

80 to 100 parts of an alkyl acrylate having an alkyl group with 1 to 8 carbon atoms and/or an alkyl methacrylate having an alkyl group with 1 to 4 carbon atoms,

0 to 20 parts of a monomer having a copolymerizable double bond,

0 to 10 parts of a polyfunctional monomer, and

0.1 to 5 parts, per 100 parts of the total amount of these monomers, of a grafting crosslinking agent, and said polymer portion for the core (A') being 5 to 35% in the innermost polymer (A).

5. The delustering thermoplastic resin composition according to claims 1, 2, 3 or 4, characterized in that, the polymeric delustering agent (II) having a mean particle size of 1 to 500 μ, is obtained by polymerization of non-crosslinkable monomers comprising:

50 to 90 parts of an aromatic vinyl monomer,

50 to 10 parts of an alkyl acrylate having an alkyl group with 1 to 13 carbon atoms and/or an alkyl methacrylate having an alkyl group with 1 to 4 carbon atoms,

0 to 40 parts of other mono-ethylenic unsaturated monomers, and

0.5 to 5 parts, per 100 parts of said non-crosslinkable monomers, of a crosslinkable monomer having two or more double bonds in the molecule.

6. The delustering thermoplastic resin composition according to claims 1, 2, 3 or 4, characterized in that, the polymeric delustering agent (II) having a mean particle size of 1 to 500 μ, is obtained by polymerization of non-crosslinkable monomers comprising:

60 to 99 parts of an alkyl acrylate having an alkyl group with 1 to 13 carbon atoms and/or an alkyl methacrylate having an alkyl group with 1 to 4 carbon atoms,

40 to 1 part of an aromatic vinyl monomer,

0 to 40 parts of other mono-ethylenic unsaturated monomers, and

0.5 to 5 parts, per 100 parts of said non-crosslinkable monomers, of a crosslinkable monomer having two or more double bonds in the molecule.

7. The use of the delustering thermoplastic resin compositions according to claims 1 to 6 for the manufacture of delustered films or sheets having a thickness of 1 mm or less.

**Patentansprüche**

1. Polymermasse mit Mehrschichtstruktur, welche ein die innere Schicht bildendes Polymer, ein die mittlere Schicht bildendes Polymer, ein die äußere Schicht bildendes Polymer und ein das Kernstück bildende vernetztes Acrylelastomer umfaßt, dadurch gekennzeichnet, daß sie 100 Gew.-Teile (im weiteren Verlauf nur als Teile bezeichnet) eines die nachfolgend beschriebene Mehrschichtstruktur (I) umfassenden thermoplastischen Harzes und 1 bis 70 Teile eines nachfolgend beschriebenen Polymermattierungsmittels (II), das aus einem aromatischen Vinylmonomer und einem Alkyl-(meth)acrylat als Hauptbestandteile gebildet wird, umfaßt:

(I) ein Acrylpolymer mit Mehrschichtstruktur weist folgende wesentliche Struktureinheiten darstellende Schichten auf:

(A) ein die innere Schicht bildendes Polymer, das folgendermaßen zusammengesetzt ist:

60 bis 100 Teile eines Alkylacrylats mit einer 1 bis 8 Kohlenstoffatome aufweisenen Alkylgruppe ($A_1$),

0 bis 40 Teile eines Monomers mit einer copolymerisierbaren Doppelbindung ($A_2$),

0 bis 10 Teile eines polyfunktionellen Monomers ($A_3$), und

0,1 bis 5 Teile eines vernetzenden Pfropfmittels pro 100 Teile der Gesamtmenge der oben genannten Bestandteile ($A_1$) bis ($A_3$), und einem Gelgehalt von 60 Gew.-% (im weiteren Verlauf als % bezeichnet) oder mehr und einem Quellgrad von 1 bis 15, wobei der Gehalt des die innere Schicht bildenden Polymers in Polymer (I) 5 bis 50% beträgt;

(C) ein die mittlere Schicht bildendes Polymer, das folgendermaßen zusammengesetzt ist:

10 bis 90 Teile eines Alkylmethacrylats mit einer 1 bis 4 Kohlenstoffatome aufweisenden Alkylgruppe ($C_1$),

10 bis 90 Teile eines Alkylacrylats mit einer 1 bis 8 Kohlenstoffatome aufweisenden Alkylgruppe ($C_2$),

0 bis 20 Teile eines Monomers mit einer copolymerisierbaren Doppelbindung ($C_3$),

0 bis 10 Teile eines polyfunktionellen Monomers ($C_4$), und

0,1 bis 5 Teile eines vernetzenden Pfropfmittels pro 100 Teile der Gesamtmenge der Bestandteile ($C_1$) bis ($C_4$), wobei der Gehalt des die mittlere Schicht bildenden Polymers in Polymer (I) 5 bis 40% beträgt, und

(B) ein die äußere Schicht bildendes Polymer, das folgendermaßen zusammengesetzt ist:

60 bis 100 Teile eines Alkylmethacrylats mit einer 1 bis 4 Kohlenstoffatome aufweisenden Alkylgruppe ($B_1$) und

0 bis 40 Teile eines Monomers mit einer copolymerisierbaren Doppelbindung ($B_2$), wobei der Gehalt des die äußere bildenden Polymers in Polymer (I) 10 bis 85% beträgt und die Anteile der in den obigen jeweiligen Polymeren verwendeten Alkylacrylate derart bestimmt werden, daß sie sich von dem die innere Schicht bildenden Polymer (A) zu dem die äußere Schicht bildenden Polymer (B) verringern; und

(II) ein polymeres Mattierungsmittel mit einer mittleren Teilchengröße von 1 bis 500 µ, das ein durch Copolymerisation nicht vernetzbarer Monomerer hergestelltes Polymer umfaßt und folgendermaßen zusammengesetzt ist:

0 bis 90 Teile eines aromatischen Vinylmonomers,

10 bis 100 Teile eines Alkylacrylats mit einer 1 bis 13 Kohlenstoffatome aufweisenden Alkylgruppe und/oder eines Alkylmethacrylats mit einer 1 bis 4 Kohlenstoffatome aufweisenden Alkylgruppe,

0 bis 40 Teile andere ungesättige Monoethylmonomere, mit 0,5 bis 5 Teilen eines vernetzbaren Monomers mit zwei oder mehr Doppelbindungen pro 100 Teile dieses nicht vernetzbaren Monomers.

2. Mattierende thermoplastische Harzmasse nach Anspruch 1, dadurch gekennzeichnet, daß das thermoplastische Harz aus dem Acrylpolymer mit Mehrschichtstruktur (I) besteht.

3. Mattierende thermoplastische Harzmasse nach Anspruch 1, dadurch gekennzeichnet, daß das thermoplastische Harz aus 1 bis 90 Teilen des Acrylpolymers mit Mehrschichtstruktur (I) und 99 bis 1 Teilen mindestens einer Art fluorierter Polymere von Homopolymeren mit Monomeren der Formeln

$$CF_2{=}CXY$$

(in der X und Y ein Wasserstoffatom, Fluoratom, Chloratom oder eine $CF_3$-Gruppe bedeuten) oder

$$CH_2{=}\underset{\displaystyle CH_3}{\underset{|}{C}}{-}COOR$$

(worin R eine Fluoralkylgruppe bedeutet), besteht, wobei die Copolymere von zwei oder mehr Arten dieser Monomere und Copolymere dieser Monomere mit anderen copolymerisierbaren Monomeren 50% dieser Monomere enthalten.

4. Mattierende thermoplastische Harzmasse nach einem der Ansprüche 1, 2 oder 3, dadurch gekennzeichnet, daß das Acrylpolymer mit Mehrschichtstruktur (I), ein die innere Schicht bildendes Polymer (A) umfaßt, das eine einen vernetzten Elastomeranteile (A'') enthaltenden Doppelschichtstruktur aufweist, welcher folgendermaßen zusammengesetzt ist:

80 bis 100 Teile eines Alkylacrylats mit einer 1 bis 8 Kohlenstoffatome aufweisenden Alkylgruppe,

0 bis 20 Teile eines Monomers mit einer copolymerisierbaren Doppelbindung,

0 bis 10 Teile eines polyfunktionellen Monomers und

0,1 bis 5 Teile pro Gesamtmenge dieser(s) Monomer(e)n eines vernetzenden Pfropfmittels und ein Polymeranteil für das Kernstück (A') des die innere Schicht bildenden Polymers (A), das folgendermaßen zusammengesetzt ist:

80 bis 100 Teile des Alkylacrylats mit einer 1 bis 8 Kohlenstoffatome aufweisenden Alkylgruppe und/oder eines Alkylmethacrylats mit einer 1 bis 4 Kohlenstoffatome aufweisenden Alkylgruppe,

0 bis 20 Teile eines Monomers mit einer copolymerisierbaren Doppelbindung,

0 bis 10 Teile eines polyfunktionellen Monomers, und

0,1 bis 5 Teile pro 100 Teile der Gesamtmenge dieser Monomere eines vernetzenden Pfropfmittels, wobei der Polymeranteil für das Kernstück (A') 5 bis 35% in dem die innere Schicht bildenden Polymers (A) beträgt.

5. Mattierende thermoplastische Harzmasse nach einem der Ansprüche 1, 2, 3 oder 4, dadurch gekennzeichnet, daß das eine mittlere Teilchengröße von 1 bis 500 µ aufweisende Polymermattierungsmittel (II) durch Polymerisation nicht vernetzbarer Monomere erhalten wird und folgende Bestandteile umfaßt:

50 bis 90 Teile eines aromatischen Vinylmonomers,

50 bis 10 Teile eines Alkylacrylats mit einer 1 bis 13 Kohlenstoffatome aufweisenden Alkylgruppe, und/oder eines Alkylmethacrylat mit einer 1 bis 4 Kohlenstoffatome aufweisenden Alkylgruppe,

0 bis 40 Teile anderer ungesättigter Monoethylmonomere und

0,5 bis 5 Teile pro 100 Teile dieser nicht vernetzbaren Monomere eines vernetzbaren Monomers mit zwei oder mehr Doppelbindungen im Molekül.

6. Mattierende thermoplastische Harzmasse nach einem der Ansprüche 1, 2, 3 oder 4, dadurch gekennzeichnet, daß das eine mittlere Teilchengröße von 1 bis 500 µ aufweisende Polymermattierungsmittel (II) durch Polymerisation nicht vernetzbarer Monomerer erhalten wird, und folgende Bestandteile umfasst:

60 bis 99 Teile eines Alkylacrylats mit einer 1 bis 13 Kohlenstoffatome aufweisenden Alkylgruppe, und/oder eines Methylmethacrylats mit einer 1 bis 4 Kohlenstoffatome aufweisenden Alkylgruppe,

40 bis 1 Teile eines aromatischen Vinylmonomers,

0 bis 40 Teile andere ungesättigte Monoethylmonomere, und

0,5 bis 5 Teile pro 100 Teile dieser nicht vernetzbaren Monomere, eines vernetzbaren zwei oder mehr Doppelbindungen im Molekül aufweisenden Monomers.

7. Verwendung der mattierenden thermoplastische Harzmassen nach einem der Ansprüche 1 bis 6 zur Herstellung mattierter Filme oder Folien mit eine Dicke von 1 mm oder weniger.

**Revendications**

1. Une composition de polymère à structure à couches multiples comprenant un polymère de couche intérieure, un polymère de couche intermédiaire et un polymère de couche extérieure et comprenant un élastomère acrylique réticulé comme âme, caractérisée en ce qu'elle comprend 100 parties en poids (ci-après, en abrégé, parties) d'une résine thermoplastique comprenant la structure à couches multiples comme défini ci-après et 1 à 70 parties d'un agent délustreur polymère (II) comme défini ci-après, constitué de monomère vinyl-aromatique et d'un acrylate ou méthacrylate d'alcoyle comme composants principaux.

(I) un polymère acrylique à structure à couches multiples ayant les couches suivantes comme unités structurales fondamentales:

(A) un polymère intérieur constitué de:

60 à 100 parties d'un acrylate d'alcoyle ayant un groupe alcoyle de 1 à 8 atomes de carbone ($A_1$),

0 à 40 parties d'un monomère ayant une double liaison copolymérisable ($A_2$),

0 à 10 parties d'un monomère polyfonctionnel ($A_3$), et

0,5 à 5 parties d'un agent réticulant de greffage pour 100 parties de la quantité totale des composants ($A_1$) à ($A_3$) ci-dessus, et ayant une teneur en gel de 60% en poids (ci-après, en abrégé, %) ou plus et un degré de gonflement de 1 à 15, la teneur en polymère intérieur dans le polymère (I) étant de 5 à 50%;

(C) au moins un polymère de couche intermédiaire constitué de:

10 à 90 parties d'un méthacrylate d'alcoyle ayant un groupe alcoyle de 1 à 4 atomes de carbone ($C_1$),

10 à 90 parties d'un acrylate d'alcoyle ayant un groupe alcoyle de 1 à 8 atomes de carbone ($C_2$),

0 à 20 parties d'un monomère ayant une double liaison copolymérisable ($C_3$),

0 à 10 partites d'un monomère polyfonctionnel ($C_4$) et

0,1 à 5 parties d'un agent réticulant de greffage pour 100 parties de la quantité totale des composants ($C_1$) à ($C_4$), la teneur en polymère de couche intermédiaire dans le polymère (I) étant de 5 à 40%, et

(B) un polymère de couche extérieure constitué de:

60 à 100 parties d'un méthacrylate d'alcoyle ayant un groupe alcoyle de 1 à 4 atomes de carbones ($B_1$), et

0 à 40 parties d'un monomère ayant une double liaision copolymérisable ($B_2$), la teneur en polymère de couche extérieure dans le polymère (I) étant de 10 à 85%, les proportions des acrylates d'alcoyle utilisées dans les polymères respectifs ci-dessus étant déterminées de manière à être reduites quand on passe du polymère intérieur (A) au polymère de couche extérieure (B); et

(II) un agent délustreur polymère ayant une grosseur moyenne de particules de 1 à 500 µm comprenant un polymère préparé par copolymérisation de monomères non-réticulables comprenant:

0 à 90 parties d'un monomère vinyl-aromatique,

10 à 100 parties d'un acrylate d'alcoyle ayant un groupe alcoyle de 1 à 13 atomes de carbone et/ou d'un méthacrylate d'alcoyle ayant un groupe alcoyle de 1 à 4 atomes de carbone,

0 à 40 parties d'atures monomères insaturés monoéthyléniques, avec 0,5 à 5 parties d'un monomère réticulable ayant deux doubles liaisons ou plus pour 100 parties de monomère non-réticulable.

2. La composition de résine thermoplastique de délustrage selon la revendication 1, caractérisée en ce que la résine thermoplastique est constituée par le polymère acrylique à structure à couches multiples (I).

3. La composition de résine thermoplastique de délustrage selon la revendication 1, caractérisée en ce que la résine thermoplastique est constituée de 1 à 99 parties du polymère acrylique à structure à couches multiples (I) et de 99 à 1 partie d'au moins une espèce de polymères fluorés choisis dans le groupe des homopolymères des monomères représentés par la formule $CF_2{=}CXY$ (où X et Y représentent H, F, Cl ou $CF_3$) ou

$$\begin{array}{l} CH_2{=}C{-}COOR \\ \quad\;\; | \\ \quad\; CH_3 \end{array}$$

(où R représente un groupe fluoroalcoyle), des copolymères de deux ou plusieurs espèces de ces monomères et des copolymères de ces monomères avec d'autres monomères copolymérisables contenant 50% de ces monomères.

4. La composition de résine thermoplastique de délustrage selon les revendications 1, 2 ou 3, caractérisée en ce que le polymère acrylique à structure à couches multiples (I) est un polymère comprenant un polymère intérieur (A) qui a une structure à double couche comprenant une portion d'élastomère réticulé (A") constituée de:

80 à 100 parties d'un acrylate d'alcoyle ayant un groupe alcoyle de 1 à 8 atomes de carbone,

0 à 20 parties d'un monomère ayant une double liaison copolymérisable,

0 à 10 parties d'un monomère polyfonctionnel et

0,5 à 5 parties, pour 100 parties de la quantité totale de ce ou ces monomères, d'un agent réticulant de greffage et une portion de polymère pour l'âme (A') du polymère intérieur (A) constitué de:

80 à 100 parties d'un acrylate d'alcoyle ayant un groupe alcoyle de 1 à 8 atomes de carbone et/ou d'un méthacrylate d'alcoyle ayant un groupe alcoyle de 1 à 4 atomes de carbone,

0 à 20 parties d'un monomère ayant une double liaison copolymérisable,

0 à 10 parties d'un monomère polyfonctionnel, et

0,1 à 5 parties, pour 100 parties de la quantité totale de ces monomères, d'un agent réticulant de greffage, la portion de polymère pour l'âme (A') étant de 5 à 35% dans le polymère intérieur (A).

5. La composition de résine thermoplastique de délustrage selon les revendications 1, 2, 3 ou 4, caractérisée en ce que l'agent délustreur polymère (II) ayant une grosseur moyenne de particules de 1 à 500 µm est obtenu par polymérisation de monomères non-réticulables comprenant:

50 à 90 parties d'un monomère vinyl-aromatique,

50 à 10 parties d'un acrylate d'alcoyle ayant un groupe alcoyle de 1 à 13 atomes de carbone et/ou d'un méthacrylate d'alcoyle ayant un groupe alcoyle de 1 à 4 atomes de carbone,

0 à 40 parties d'autres monomères insaturés monoéthylèniques et

0,5 à 5 parties, pour 100 parties de monomères non-réticulables, d'un monomère réticulable ayant deux doubles liaisons ou plus dans la molécule.

6. La composition de résine thermoplastique de délustrage selon les revendications 1 , 2, 3 ou 4, caractérisée en ce que l'agent délustreur polymère (II) ayant une grosseur moyenne de particules de 1 à 500 µm est obtenu par polymérisation de monomères non-réticulables comprenant:

60 à 99 parties d'un acrylate d'alcoyle ayant un groupe alcoyle de 1 à 13 atomes de carbone et/ou d'un méthacrylate d'alcoyle ayant un groupe alcoyle de 1 à 4 atomes de carbone,

40 à 1 parties d'un monomère vinyl-aromatique,

0 à 40 parties d'autres monomères insaturés monoéthyléniques et 0,5 à 5 parties, pour 100 parties de monomères non-réticulables, d'un monomère réticulable ayant deux doubles liaisons ou plus dans la molécule.

7. L'utilisation des compositions de résines thermoplastiques de délustrage selon les revendications 1 à 6 pour la fabrication de pellicules ou feuilles délustrées ayant une épaisseur de 1 mm ou moins.